(19) Europäisches Patentamt
European Patent Office
Office européen des brevets

(11) EP 4 708 603 A1

(12) **EUROPEAN PATENT APPLICATION**

(43) Date of publication:
**11.03.2026 Bulletin 2026/11**

(21) Application number: **24198980.5**

(22) Date of filing: **06.09.2024**

(51) International Patent Classification (IPC):
***H02H 9/02*** *(2006.01)*

(52) Cooperative Patent Classification (CPC):
**H02H 9/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ABB SCHWEIZ AG**
**5400 Baden (CH)**

(72) Inventors:
- **SCHWEIZER, Mario**
  **5406 Rütihof (CH)**
- **LAZAREVIC, Vladan**
  **5406 Baden-Rütihof, Aargau (CH)**
- **ABPLANALP, Markus Andreas**
  **5405 Baden-Dättwil (CH)**

(74) Representative: **Maiwald GmbH**
**Engineering**
**Elisenhof**
**Elisenstrasse 3**
**80335 München (DE)**

(54) **CURRENT-LIMITING SOLID STATE CIRCUIT BREAKER ARRANGEMENT**

(57) The invention relates to an apparatus (101) and to a method for limiting a current in case of a short circuit. The apparatus (101) comprises a first semiconductor (S1) and a second semiconductor (S2) as main switches, arranged in series between an apparatus-input ($a_{in}$) and an apparatus-output ($a_{out}$), with a first central node (N1) between them; and a first parallel-diode (D1) arranged in parallel to the first semiconductor (S1), in backward direction, and a second parallel-diode (D2) arranged in parallel to the second semiconductor (S2), in forward direction. The apparatus (101) further comprises a first branch diode (Da1) in forward direction, and a second branch diode (Da2) in backward direction arranged in series between the apparatus-input ($a_{in}$) and the apparatus-output ($a_{out}$), with a second central node (N2) between them; and a chopper-circuit (CC), arranged between the first central node (N1) and the second central node (N2). The chopper-circuit (CC) comprises a chopper capacitor (Cb), arranged between the first central node (N1) and the second central node (N2), and a chopper semiconductor (Sb), arranged in series with a chopper resistor (Rb), this series arranged between the first central node (N1) and the second central node (N2).

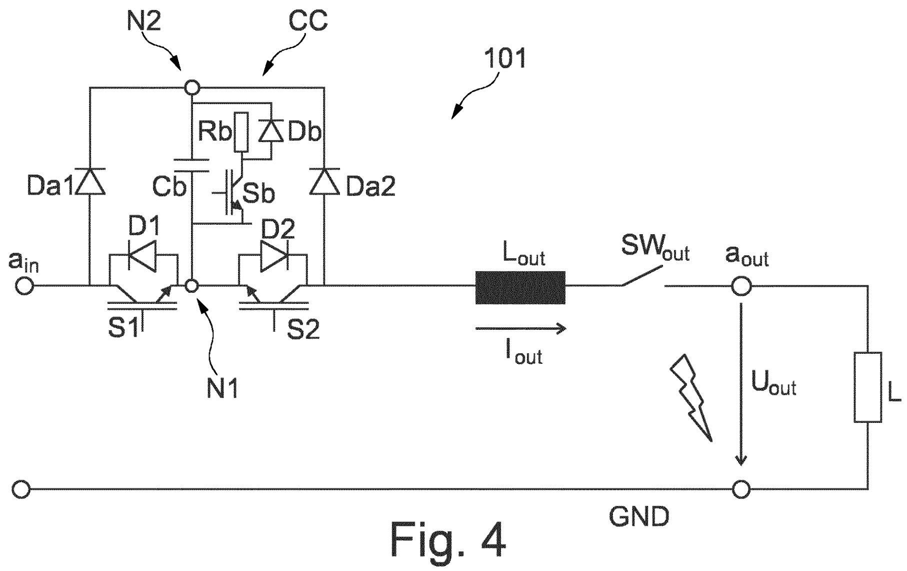


Fig. 4



Processed by Luminess, 75001 PARIS (FR)

## Description

### Technical Field

The invention relates to the field of solid state circuit breakers (SSCBs), particularly to an apparatus and a method for limiting a current in case of a short circuit. The invention further relates to a use.

### Background

In many systems, e.g. in DC grids, solid state circuit breakers (SSCBs) may play a crucial role in protecting the system. However, the high interruption speed, which is typical for SSCBs may have some drawbacks, at least in some configurations. An example for a SSCB configuration according to state of the art may be a combination of two serial semiconductors and a parallel varistor that is to dissipate the energy stored, e.g., in inductive elements in the system. However, for real systems this may cause excessive losses in the varistor and in the semiconductors during the "breaking" or "tripping" phase. This may lead to a high thermal stress of said components and, thus, increases the risk of failing.

### Description

It is an objective of the disclosure to provide an improved SSCB arrangement.
This objective is achieved by the subject-matter of the independent claims. Further embodiments are evident from the dependent claims and the following description.
One aspect relates to an apparatus for limiting a current in case of a short circuit, the apparatus comprising:

a first semiconductor and a second semiconductor as main switches, arranged in series between an apparatus-input and an apparatus-output, the first semiconductor in forward direction and the second semiconductor in backward direction, with a first central node between them;
a first parallel-diode arranged in parallel to the first semiconductor, in backward direction, and a second parallel-diode arranged in parallel to the second semiconductor, in forward direction;
a first branch diode in forward direction, and a second branch diode in backward direction arranged in series between the apparatus-input and the apparatus-output, with a second central node between them; and
a chopper-circuit, arranged between the first central node and the second central node, the chopper-circuit comprising:

a chopper capacitor, arranged between the first central node and the second central node,and
a chopper semiconductor, arranged in series with a chopper resistor, this series arranged between the first central node and the second central node,
so that the sub-circuit comprising the branch diodes and the chopper-circuit is configured for limiting the current in case of a short circuit by leading the current through this sub-circuit.

The short circuit may occur, for instance, in a power supply grid or in a so-called microgrid. The grid or the microgrid may be a DC-based system, but this apparatus may also be used in AC-based systems. The apparatus may be arranged between power-producing devices or plants and a load, so that the apparatus-input is on the power-producing side and the apparatus-output is on the power-consuming side or load side. The "load" may be realized as a plurality of loads.
The "main switches" of the apparatus are switches or components, over which in a normal operation mode the power is led. In a "breaking" or "tripping" phase, these main switches are opened, thus interrupting the power from the power-producing part to the load. The main switches comprise a first semiconductor and a second semiconductor, which are arranged in series between the apparatus-input and the apparatus-output. More precisely: The semiconductors are arranged in an "antiserial" way. In case the semiconductors are bipolar semiconductors or IGBTs, the first semiconductor and the second semiconductor may be arranged in a common emitter arrangement or in a common collector arrangement. In case the semiconductors are MOSFETs, the first semiconductor and the second semiconductor may be arranged in a common drain arrangement or in a common source arrangement. Between the first semiconductor and the second semiconductor, a first central node is located.
A first parallel-diode is arranged in parallel to the first semiconductor, in backward direction, and a second parallel-diode is arranged in parallel to the second semiconductor, in forward direction. Thus, the node located between the first parallel-diode and the second parallel-diode is the same "first central node" (is has the same potential) as the first central node between the first semiconductor and the second semiconductor. The term "forward direction" means that current can flow through this diode from the apparatus-input to the apparatus-output, and "backward direction" or "reverse direction" means the diode is blocking current from the apparatus-input to the apparatus-output. In some types of semiconductors, the parallel-diode may be implemented as a so-called "body-diode".

The apparatus further comprises a first branch diode in forward direction, and a second branch diode in backward direction. These diodes are arranged in series between the apparatus-input and the apparatus-output, with a second central node between them.

The apparatus further comprises a chopper-circuit, which is arranged between the first central node and the second central node. The chopper-circuit comprises a chopper capacitor, which is arranged between the first central node and the second central node. Thus, the voltage between the first central node and the second central node may also be called "chopper capacitor voltage". The chopper-circuit further comprises a chopper semiconductor, arranged in series with a chopper resistor. This series of the chopper semiconductor and the chopper resistor is arranged between the first central node and the second central node.

In an embodiment, the chopper-circuit may further comprise a chopper diode in backward direction. The chopper diode is arranged in parallel to the chopper resistor. This chopper diode, designed as a freewheeling diode, may be advantageous in case the chopper resistor has a non-negligible parasitic inductance.

Thus, the sub-circuit comprising the branch diodes and the chopper-circuit is advantageously configured for limiting the current in case of a short circuit by leading the current through this sub-circuit. The apparatus may have, compared to other approaches, at least following advantages:

- The apparatus avoids the usage of a freewheeling path connected between positive and negative potential of the bus voltage. Such a freewheeling path can be an issue with respect to compliance with certain circuit breaker standards and tests.
- The apparatus is able to achieve long-duration (tens of milliseconds) current limitation with minor hardware changes and is just a simple extension of at least some existing SSCB arrangements. It may allow a coordination with slower downstream breakers of mechanical or hybrid type that have opening times of several milliseconds.
- The method may avoid switching the main semiconductors during current limiting operation. Only the chopper switch is operated, and the switching frequency of the chopper switch is considerably low. This may allow to use high current devices with high switching losses (e.g. IGCTs or RB-IGCTs) for the main switches and a cheaper device (e.g. an IGBT) for the chopper switch.
- The method operates with a chopper resistor, a device that is commonly being used in unidirectional motor drives as a braking resistor. It avoids abusing varistors (MOVs) outside their specifications if operated in repetitive chopping mode.
- The method may allow to selectively leave current limiting mode and interrupt the fault current safely within a few tens of microseconds.
- The method may, additionally or as an alternative, allow to pre-charge a "dead" bus (i.e. a bus without voltage, e.g. at system starts) and input capacitors of converters with a limited and controlled charging current.

One aspect relates to an apparatus for limiting a current in case of a short circuit, the apparatus comprising:

a first IGCT (integrated gate-commutated thyristor) and a second IGCT as main switches, arranged antiparallel between an apparatus-input and an apparatus-output;
a first diode in backward direction and a second diode in forward direction arranged in series between the apparatus-input and the apparatus-output, with a first central node between them;
a first branch diode in forward direction, and a second branch diode in backward direction arranged in series between the apparatus-input and the apparatus-output, with a second central node between them; and
a chopper-circuit, arranged between the first central node and the second central node, the chopper-circuit comprising:

> a chopper capacitor, arranged between the first central node and the second central node,and
> a chopper semiconductor, arranged in series with a chopper resistor, this series arranged between the first central node and the second central node,
> so that the sub-circuit comprising the branch diodes and the chopper-circuit is configured for limiting the current in case of a short circuit by leading the current through this sub-circuit.

This variant may advantageously be used in combination with an integrated gate-commutated thyristor, IGCT, or with reverse-blocking integrated gate-commutated thyristor, RB-IGCT.

One aspect relates to an apparatus for limiting a current in case of a short circuit, the apparatus comprising:

a mechanical switch as main switch, arranged between an apparatus-input and an apparatus-output;

a first diode in backward direction and a second diode in forward direction arranged in series between the apparatus-input and the apparatus-output, with a first central node between them;
a first branch diode in forward direction, and a second branch diode in backward direction arranged in series between the apparatus-input and the apparatus-output, with a second central node between them; and
a chopper-circuit, arranged between the first central node and the second central node, the chopper-circuit comprising:

a chopper capacitor, arranged between the first central node and the second central node,and
a chopper semiconductor, arranged in series with a chopper resistor, this series arranged between the first central node and the second central node,
so that the sub-circuit comprising the branch diodes and the chopper-circuit is configured for limiting the current in case of a short circuit by leading the current through this sub-circuit.

This variant may advantageously be used in combination with a mechanical switch, thus implementing a so-called "hybrid breaker". The mechanical switch may be a relay or a tripping switch or a contactor switch or a breaker.

In various embodiments, the chopper-circuit may further comprise a chopper diode in backward direction. The chopper diode is arranged in parallel to the chopper resistor. This chopper diode, designed as a freewheeling diode, may be advantageous in case the chopper resistor has a non-negligible parasitic inductance.

In various embodiments, the apparatus further comprises an inductor, the inductor being arranged between the apparatus-output and a load. Additionally or as an alternative, the inductor may be arranged at the input side of the apparatus. The inductor may have an inductance between 1 μH and 500 μH, particularly between 15 μH and 150 μH. The inductor advantageously limits the maximum rate of change of the fault current.

In various embodiments, the apparatus further comprises a mechanical switch, the mechanical switch being arranged between the apparatus-output and the load. Additionally or as an alternative, the mechanical switch may be arranged at the input side of the apparatus. Additionally or as an alternative, the apparatus further comprises a mechanical switch arranged before the apparatus-input. The mechanical switch(es) may allow a galvanic isolation on input and/or on output side of the apparatus.

In various embodiments, the apparatus further comprises an auxiliary pre-charge circuit to keep the voltage at Cb close to the nominal bus voltage.

In various embodiments, the apparatus further comprises small inductors at input and/or at output side. These may be advantageous to limit the maximum di/dt and for current control purposes. In an embodiment, the apparatus further comprises current sensors at input and at output side for current control purposes and/or a voltage sensor across the chopper capacitor for control purposes.

One aspect relates to a method for limiting a current in case of a short circuit by means of an apparatus of any one of the preceding claims, the method comprising the steps of:

setting the apparatus in a normal operation mode, in which the main switches are closed;
when an overcurrent occurs, setting the apparatus in a current limiting mode, in which the main switches are opened, and a sub-circuit comprising branch diodes and a chopper-circuit limits the current in case of a short circuit by leading the current through this sub-circuit, the current limiting mode being performed for a predefined period; and
after the predefined period, setting the apparatus in a fast interruption mode, in which the main switches are open and the chopper-circuit is turned off by turning off the chopper semiconductor Sb.

The "main switches" of the apparatus are switches or components, over which in a normal operation mode the power is led. In a "breaking" or "tripping" phase, these main switches are opened, thus interrupting the power from the power-producing part to the load. The main switches may comprise a first semiconductor and a second semiconductor, which are arranged in series between the apparatus-input and the apparatus-output. The main switches may comprise a first IGCT and a second IGCT arranged antiparallel between the apparatus-input and the apparatus-output. The main switches may comprise a mechanical switch arranged between the apparatus-input and the apparatus-output.

In various embodiments, the duration of the predefined period is between 0.1 ms and 100 ms, particularly 0.5 ms and 20 ms. This short timeframe may contribute that the apparatus may be used both for DC-based systems and for AC-based systems.

In various embodiments, the frequency of the chopper-circuit's oscillating mode is between 1 kHz and 20 kHz, particularly between 2 kHz and 5 kHz. This comparably low frequency may contribute to low switching losses in the chopper semiconductor even in case of an overcurrent.

One aspect relates to a use of an apparatus as described above and/or below for DC grids, for DC microgrids, for AC grids and/or for AC microgrids. The term "grid" may, e.g., designate large power distribution systems. The term "microgrid" may, e.g., designate power distribution systems that are connected to one system, e.g. in cases of renewable energy systems, or for charging systems for electric vehicles.

One aspect relates to a use of an apparatus as described above and/or below for an overcurrent occurring at an apparatus-input and/or at an apparatus-output. The apparatus is fully bidirectional, i.e., the arrangement can limit and/or interrupt currents in both directions. In complex grids, energy sources could be connected also downstream, i.e., at the apparatus-output. A short-circuit at the apparatus-input would lead to a high fault current in reverse direction. The apparatus described above and/or below can also limit and interrupt high fault currents in reverse direction.

One aspect relates to a use of an apparatus as described above and/or below for a blackstart of a DC bus. A "blackstart" may be a system restart, from no current and/or voltage being in the power system.

For further elucidation, the disclosure is described by means of embodiments shown in the figures. These embodiments are to be considered as examples only, but not as limiting.

## Brief Description of the Drawings

The drawings depict:

| | |
|---|---|
| **Fig. 1** | schematically an embodiment of a solid state circuit breaker according to state of the art; |
| **Fig. 2** | schematically a diagram of a current in an embodiment according to **Fig. 1;** |
| **Fig. 3** | schematically a diagram of power losses in an embodiment according to **Fig. 1;** |
| **Fig. 4** | schematically an apparatus according to an embodiment; |
| **Figs. 5a - 5c** | schematically current flows in an embodiment according to **Fig. 4;** |
| **Figs. 6a - 6c** | schematically current flows in an embodiment according to **Fig. 4;** |
| **Fig. 7** | schematically a diagram of a current in an embodiment according to **Fig. 4;** |
| **Fig. 8** | schematically a diagram of a voltage in an embodiment according to **Fig. 4;** |
| **Fig. 9** | schematically a diagram of a current in an embodiment according to **Fig. 4;** |
| **Fig. 10** | schematically a diagram of a voltage in an embodiment according to **Fig. 4;** |
| **Fig. 11** | schematically a diagram of a current in an embodiment according to **Fig. 4;** |
| **Fig. 12** | schematically a diagram of a voltage in an embodiment according to **Fig. 4;** |
| **Figs. 13 - 16** | schematically examples of embodiments; |
| **Fig. 17** | a flow diagram according to an embodiment. |
| **Fig. 18** | schematically a sub-circuit according to an embodiment; |
| **Fig. 19** | schematically a diagram of a current and a voltage in an embodiment according to **Fig. 4** in a blackstart situation. |

## Detailed Description of Embodiments

**Fig. 1** shows schematically an embodiment of a solid state circuit breaker (SSCB) 105 according to state of the art. The SSCB 105 has two semiconductors S1 and S2, arranged in series (or "antiserial"), between an apparatus-input $a_{in}$ and an apparatus-output $a_{out}$. The SSCB 105 has further a varistor Z1, arranged parallel to the semiconductors S1 and S2. Before the apparatus-output $a_{out}$, an inductance $L_{out}$ is arranged, through which a current $I_{out}$ flows. The inductance $L_{out}$ can be a physical component of the SSCB and / or it can represent the total inductance in the microgrid due to wiring and filtering components. To illustrate the effect of this SSCB 105 in a quantitative way, some exemplary values are used. To limit the current during a fault overcurrent using this SSCB 105, a tolerance band control may be used. The diagrams of **Fig. 2** and **Fig. 3** assume a current limit of 110 A, with a tolerance band of 20 A. For the inductance $L_{out}$ 100 $\mu$H is assumed. Furthermore, an upstream line inductance (not shown) with a value of 2 $\mu$H is assumed. An ideal short circuit fault (depicted as flash) is applied at the end of the line, in the area of apparatus-output $a_{out}$, after 1 ms.

The resulting behaviour of the current $I_{out}$ is shown in **Fig. 2.** When the current $I_{out}$ reaches an upper threshold (here: 110 A), the semiconductors S1 and S2 are turned off and the current commutates to the varistor Z1. The varistor creates a clamping voltage Uzi, typically a few hundred Volts higher than nominal system voltage Uout. The difference between the nominal voltage and the varistor voltage (a few hundred volts with opposite sign) is applied to the line inductance $L_{out}$:

$$U_{Lout} = U_{out} - U_{Z1} = L_{out} \cdot di/dt \approx -200\ V.$$

This reduces the fault current rapidly. The current will reach the lower threshold of the tolerance band (here: 110 A - 20 A = 90 A) within a few tens of microseconds and the semiconductors S1 and S2 are, in consequence, turned on again.

Consequently, a series of turn-off and turn-on events will occur with a very high repetition rate. This leads to a high switching frequency (40 kHz in this example) of the semiconductors S1 and S2, which in turn creates high switching losses in the semiconductors. Additionally, for every turn-off event, major part of the stored energy in the line inductance is burned in the varistor, as shown in **Fig. 3.** Due to the high repetition rate, the average losses in the varistor can reach very high value (35 kW in this example). Most of the varistors (MOVs) are not designed to operate in repetitive mode, i.e., such a chopping mode would operate the varistor outside its specifications. This may lead to a high thermal stress of said components and, thus, increases the risk of failing.

This behaviour of state-of-the-art SSCB 105 leads to the following major issues that limit the feasible current limiting phase to a few hundreds of microseconds only:

- The varistor is operated outside its specifications, particularly because most varistors are not designed to operate in repetitive mode.
- The maximum dissipation energy of the varistor is reached within a few tens of microseconds and the varistor Z1 may overheat and fail if no costly high performance cooling concept is applied.
- The high switching frequency will create high switching losses in the semiconductors S1 and S2. This may lead to excessive temperatures and increases the risk of a failure, particularly if no costly high performance cooling concept is applied.
- The required switching frequency often cannot be achieved in high-current SSCBs, e.g. when using IGCTs, as the gate driver unit has a limited switching capability in the lower kilohertz range.

**Fig. 4** shows schematically an apparatus 101 according to an embodiment, which is designed to overcome the above issues, by limiting a current in case of a short circuit. The apparatus 101 comprises a first semiconductor S1 and a second semiconductor S2 as main switches. The main switches S1 and S2 are arranged in series between an apparatus-input $a_{in}$ and an apparatus-output $a_{out}$ of the apparatus 101. Most of the following explanations assume (without limitation) a DC bus to be protected. The apparatus-input $a_{in}$ may be a plus pole.

Between the first semiconductor S1 and the second semiconductor S2 a first central node N1 is located. The apparatus 101 further comprises a first parallel-diode D1 arranged in parallel to the first semiconductor S1, in backward direction, and a second parallel-diode D2 arranged in parallel to the second semiconductor S2, in forward direction. Thus, the first central node N1 is also located between the first parallel-diode D1 and the second parallel-diode D2.

For limiting the current in case of a short circuit, a sub-circuit is arranged in parallel to the semiconductors S1 and S2. The sub-circuit comprises a first branch diode Da1 in forward direction, and a second branch diode Da2 in backward direction. The branch diodes Da1 and Da2 are arranged in series between the apparatus-input $a_{in}$ and the apparatus-output $a_{out}$. Between the branch diodes Da1 and Da2, a second central node N2 is located. The sub-circuit further comprises a chopper-circuit CC, arranged between the first central node N1 and the second central node N2. Said chopper-circuit CC comprises a chopper capacitor Cb, arranged between the first central node N1 and the second central node N2, and a chopper semiconductor Sb, arranged in series with a chopper resistor Rb; this series is arranged between the first central node N1 and the second central node N2.

The chopper resistor Rb may be chosen such that the current flowing through it, when the chopper switch Sb is turned on at nominal bus voltage VN, is higher than the maximum limited fault current:

$$Rb < VN / I_{lim,max}$$

This design is robust in the following sense: If the fault current is higher than the chopper resistor current when Sb is turned on continuously, the voltage at Cb continues to rise. Consequently, an increased voltage is inserted in series to the fault and the fault current will start to reduce naturally.

Furthermore, the chopper-circuit CC comprises a chopper diode Db in backward direction. The chopper diode Db is arranged in parallel to the chopper resistor Rb. The chopper diode Db may be advantageous in case the chopper resistor Rb has a non-negligible parasitic inductance.

An example for the current limiting mode is shown in **Fig. 7.** The current limit is again assumed to be 110 A, with a tolerance band of 20 A. The downstream line inductance $L_{out}$ is assumed to be 100 $\mu$H, and the upstream line inductance (not shown) is assumed to be 2 $\mu$H. In a normal operation mode, the main switches S1 and S2 are closed. The resulting current flow is depicted in **Fig. 5a.**

To the apparatus 101 of **Fig. 4,** a short circuit fault (depicted as flash) is applied, after 1 ms. The short circuit fault occurs, in the area of apparatus-output $a_{out}$. As can be seen in **Fig. 7,** this leads, immediately after the short circuit fault occurs at 1 ms, to a significant increase of the current $I_{out}$ through inductance $L_{out}$. The current $I_{out}$ rises from about 20 A to about 110 A. When the fault is detected, the semiconductor switches S1 and S2 are turned off permanently and the device enters a current limiting mode. In the current limiting mode, the current will commutate to the parallel branch diode Da1, capacitor Cb and the diode D2; see **Fig. 5b.** The voltage of the capacitor Cb is building up and is inserted in series between the bus voltage and the fault. As soon as the capacitor voltage has reached the bus voltage, the fault current $I_{out}$ stops rising

and starts to decay. In order to limit and control the fault current in a given band, the chopper switch Sb is turned on when the fault current reaches the lower current threshold; see **Fig. 5c.** This will start to discharge the capacitor Cb over the chopper resistor Rb. The voltage at Cb, then, falls below the nominal bus voltage and the fault current will start to rise again. If the upper current threshold is reached, the chopper switch Sb is turned off again, the voltage at the capacitor Cb rises, until the fault current starts to fall again. This sequence is repeated as long as current limitation is required. The resulting switching frequency of the chopper switch depends mostly on the capacitance Cb, the chopper resistor Rb and the width of the current control tolerance band and can easily be tuned to be in the range of a few kilohertz only. After the current limitation period, the fault can be interrupted quickly by turning off the chopper switch Sb continuously. This is shown in **Fig. 7** at 6 ms. The voltage at the capacitor Cb will then rise above the nominal bus voltage, and the current will decay to zero within a few microseconds.

Example waveforms assuming a capacitor Cb that is pre-charged to a nominal bus voltage of 350 V are shown in **Figs. 7 and 8.** When current limiting mode is entered, the fault current $I_{out}$ is kept within the tolerance band of (90 A, 110 A). The voltage at the capacitor Cb stays close to the nominal bus voltage. When current limitation mode is left and the current interruption mode is activated after 6 ms, the voltage at capacitor Cb rises to 450V and the fault current decays to zero after a few tens of microseconds.

Example waveforms assuming a capacitor Cb of 50 $\mu$F that is not pre-charged are shown in **Fig. 9** and **Fig. 10.** When the fault occurs (at 1 ms), the current $I_{out}$ may firstly overshoot the current limit of 110 A for a moment, until the voltage $U_{Cb}$ at capacitor Cb has reached a voltage high enough. After the first overshoot, the fault current $I_{out}$ returns to the tolerance band of (90A, 110A). The voltage at the capacitor Cb stays close to the nominal bus voltage. When the current limitation mode is left and the current interruption mode is activated (at 6 ms), the voltage $U_{Cb}$ at capacitor Cb rises to 480 V, and the fault current $I_{out}$ decays to zero after a few tens of microseconds.

Depending on the installed capacitance Cb and depending on the grid inductance, it may be necessary to limit the voltage $U_{Cb}$ at capacitor Cb to an admissible level (i.e. to a few hundred volts above nominal bus voltage, but below the rated voltage of the diodes and semiconductor switches) during current interruption. This can be done by turning on the chopper switch Sb for a short time duration again when the upper capacitor voltage limit is reached. By this, the voltage $U_{Cb}$ at the capacitor Cb is kept at an elevated level (a few hundred volts above nominal bus voltage) with a voltage tolerance band control: if the upper capacitor voltage threshold is reached, the chopper switch Sb is turned on to discharge the capacitor Cb, until the lower capacitor voltage threshold is reached. Then the switch Sb is turned off again.

An example of the capacitor voltage limitation during current interruption with an increased grid inductance of 400 $\mu$H is shown in **Fig. 11** and **Fig. 12.** The voltage $U_{Cb}$ at the capacitor Cb is limited with the chopper to 500 V to protect all the semiconductors in the SSCB.

**Figs. 6a - 6c** show schematically current flows in an embodiment according to **Fig. 4** in a case of a short at the input of the apparatus. Such an event could occur in complex microgrids in which energy sources can also be connected downstream, i.e., at the output side of the breaker apparatus. In such a case, these energy sources will lead to a fault current in reverse direction through the apparatus. As the proposed arrangement is fully bidirectional the same functionality of current limitation and interruption is achieved again for this situation.

**Figs. 13 - 16** show schematically examples of embodiments, to compare some alternatives, which are adapted to several types of main switches. Same reference signs designate the same or similar elements. **Fig. 13** is essentially identical to **Fig. 4,** only without inductor $L_{out}$. **Fig. 14** shows an implementation with a common collector arrangement, instead of the common emitter arrangement of **Fig. 13. Fig. 15** shows an embodiment 102 with reverse-blocking integrated gate-commutated thyristors (RB-IGCTs) S11 and S12, which are arranged antiparallel between an apparatus-input $a_{in}$ and an apparatus-output $a_{out}$. A first central node N1 is located between diodes Db1 and Db2. **Fig. 16** shows an embodiment 103 for a hybrid breaker, with a mechanical switch SWm as main switch, arranged between an apparatus-input $a_{in}$ and an apparatus-output $a_{out}$. A first central node N1 is located between diodes Db1 and Db2.

**Fig. 17** shows a flow diagram 200 according to an embodiment. The flow diagram 200 illustrates a method for limiting a current in case of a short circuit by means of an apparatus 101, 102, 103 (see, e.g., **Figs. 13 -16).** In a step 205, the apparatus 101, 102, 103 is set in a normal operation mode, in which the main switches S1, S2, S11, S12, SWm are closed and Sb is open. In a step 210, it is checked if an overcurrent occurs. If not, the apparatus 101, 102, 103 stays in the normal operation mode. When an overcurrent occurs, the apparatus 101, 102, 103 is set in a current limiting mode, in which the main switches S1, S2, S11, S12, SWm are opened, and a sub-circuit - the sub-circuit comprising branch diodes Da1, Da2 and a chopper-circuit CC -limits the current in case of a short circuit by leading the current through this sub-circuit. The current limiting mode may be performed for a predefined period $T_{lim}$, which is checked in a step 220. When the predefined period $T_{lim}$ has passed - or any other condition for interruption of the current becomes true -, the apparatus 101, 102, 103 is set, in a step 225, in a fast interruption mode, in which the main switches S1, S2, S11, S12, SWm are still open and the chopper-circuit CC is turned off by turning off Sb. It is also possible that the apparatus leaves current limiting mode 215 and goes back to normal mode 205 or 210, when the fault current decays below the overcurrent threshold by itself, e.g., because another downstream breaker in series has isolated the fault.

**Fig. 18** shows schematically a sub-circuit Sb_control according to an embodiment. Sb_control has the input "Fast Interrupt", i.e. a fast interrupt is requested when the flow diagram Fig. 17 has reached state 225, the input $I_{out}$, i.e. the apparatus' output current; and the input $U_{Cb}$, i.e. the voltage at chopper capacitor Cb. The output of Sb_control is connected to a gate of the chopper switch Sb. $I_{out}$ and Ucb realize a hysteresis function. The logic of Sb_control while in current limiting mode 215 and in fast interruption mode 225 can be shown in following Table 1:

**Table 1:** Logic of Sb_control

| Fast Interrupt | $I_{out}$ | $U_{Cb}$ | Output |
|---|---|---|---|
| No | > current limit | > voltage limit | 1 |
| No | > current limit | < voltage limit | 0 |
| No | < current limit | > voltage limit | 1 |
| No | < current limit | < voltage limit | 1 |
| Yes | > current limit | > voltage limit | 1 |
| Yes | > current limit | < voltage limit | 0 |
| Yes | < current limit | > voltage limit | 1 |
| Yes | < current limit | < voltage limit | 0 |

The input $I_{out}$ may consider a current hysteresis, to build a current limiting tolerance band, as described above. The input $U_{Cb}$ may consider a voltage hysteresis, to build a voltage limiting tolerance band, as described above.

**Fig. 19** shows schematically a diagram of a current and a voltage in an embodiment according to **Fig. 4** in a blackstart situation, i.e. in a situation - e.g. after a hardware reset - when the DC bus has no power (the DC bus voltage is zero). The apparatus 101, 102, 103 (see, e.g., **Figs. 13 - 16)** can advantageously also used in this situation, to mitigate the currents in the system. When the DC bus voltage is zero, the DC bus and potentially connected load converters with input capacitors $C_{load}$ can be charged with an upper current limit. During this pre-charge process, the method for current limitation as described above and/or below can be used. The main switches S1 and S2 stay off until the charge current has settled down and the output voltage has reached nearly the nominal bus voltage. During this period, the current flows through the chopper resistor Rb. Thus, the chopper resistor Rb acts as a pre-charge resistor. When the output voltage is close to a nominal voltage, the main switches S1 and S2 can be closed safely and the subsequent oscillation may, thus, stay within an acceptable range. Cb can be much smaller than typical load input capacitors $C_{load}$.

## Claims

**1.** An apparatus (101) for limiting a current in case of a short circuit, the apparatus (101) comprising:

a first semiconductor (S1) and a second semiconductor (S2) as main switches, arranged in series between an apparatus-input ($a_{in}$) and an apparatus-output ($a_{out}$), the first semiconductor in forward direction and the second semiconductor in backward direction, with a first central node (N1) between them;
a first parallel-diode (D1) arranged in parallel to the first semiconductor (S1), in backward direction, and a second parallel-diode (D2) arranged in parallel to the second semiconductor (S2), in forward direction;
a first branch diode (Da1) in forward direction, and a second branch diode (Da2) in backward direction arranged in series between the apparatus-input ($a_{in}$) and the apparatus-output ($a_{out}$), with a second central node (N2) between them; and
a chopper-circuit (CC), arranged between the first central node (N1) and the second central node (N2), the chopper-circuit (CC) comprising:

a chopper capacitor (Cb), arranged between the first central node (N1) and the second central node (N2), and
a chopper semiconductor (Sb), arranged in series with a chopper resistor (Rb), this series arranged between the first central node (N1) and the second central node (N2),
so that the sub-circuit comprising the branch diodes (Da1, Da2) and the chopper-circuit (CC) is configured for limiting the current in case of a short circuit by leading the current through this sub-circuit.

**2.** The apparatus (101) of claim 1,

wherein the first semiconductor (S1) and the second semiconductor (S2) are bipolar semiconductors or IGBTs,

the first semiconductor (S1) and the second semiconductor (S2) being arranged in a common emitter arrangement or in a common collector arrangement.

**3.** The apparatus (101) of claim 1,

wherein the first semiconductor (S1) and the second semiconductor (S2) are MOSFET or JFET semiconductors, the first semiconductor (S1) and the second semiconductor (S2) being arranged in a common drain arrangement or in a common source arrangement.

**4.** An apparatus (102) for limiting a current in case of a short circuit, the apparatus (102) comprising:

a first reverse blocking IGCT (S11) and a second reverse blocking IGCT (S12) as main switches, arranged antiparallel between an apparatus-input ($a_{in}$) and an apparatus-output ($a_{out}$);
a first diode (Db1) in backward direction and a second diode (Db2) in forward direction, arranged in series between the apparatus-input ($a_{in}$) and the apparatus-output ($a_{out}$), with a first central node (N1) between them;
a first branch diode (Da1) in forward direction, and a second branch diode (Da2) in backward direction arranged in series between the apparatus-input ($a_{in}$) and the apparatus-output ($a_{out}$), with a second central node (N2) between them; and
a chopper-circuit (CC), arranged between the first central node (N1) and the second central node (N2), the chopper-circuit (CC) comprising:

a chopper capacitor (Cb), arranged between the first central node (N1) and the second central node (N2), and
a chopper semiconductor (Sb), arranged in series with a chopper resistor (Rb), this series arranged between the first central node (N1) and the second central node (N2),
so that the sub-circuit comprising the branch diodes (Da1, Da2) and the chopper-circuit (CC) is configured for limiting the current in case of a short circuit by leading the current through this sub-circuit.

**5.** An apparatus (103) for limiting a current in case of a short circuit, the apparatus (103) comprising:

a mechanical switch (SWc) as main switch, arranged between an apparatus-input ($a_{in}$) and an apparatus-output ($a_{out}$);
a first diode (Db1) in backward direction and a second diode (Db2) in forward direction, arranged in series between the apparatus-input ($a_{in}$) and the apparatus-output ($a_{out}$), with a first central node (N1) between them;
a first branch diode (Da1) in forward direction, and a second branch diode (Da2) in backward direction arranged in series between the apparatus-input ($a_{in}$) and the apparatus-output ($a_{out}$), with a second central node (N2) between them; and
a chopper-circuit (CC), arranged between the first central node (N1) and the second central node (N2), the chopper-circuit (CC) comprising:

a chopper capacitor (Cb), arranged between the first central node (N1) and the second central node (N2), and
a chopper semiconductor (Sb), arranged in series with a chopper resistor (Rb), this series arranged between the first central node (N1) and the second central node (N2),
so that the sub-circuit comprising the branch diodes (Da1, Da2) and the chopper-circuit (CC) is configured for limiting the current in case of a short circuit by leading the current through this sub-circuit.

**6.** The apparatus (101, 102, 103) of any one of the preceding claims, further comprising a chopper diode (Db) in backward direction, the chopper diode (Db) being arranged in parallel to the chopper resistor (Rb).

**7.** The apparatus (101, 102, 103) of any one of the preceding claims, further comprising an inductor ($L_{out}$), the inductor ($L_{out}$) being arranged between the apparatus-output ($a_{out}$) and a load (L).

**8.** The apparatus (101, 102, 103) of claim 7, wherein the inductor ($L_{out}$) has an inductance between 1 μH and 500 μH, particularly between 15 μH and 150 μH.

**9.** The apparatus (101, 102, 103) of any one of the preceding claims, further comprising a mechanical switch, the mechanical switch being arranged between the apparatus-output ($a_{out}$) and the load (L).

**10.** A method for limiting a current in case of a short circuit by means of an apparatus (101, 102, 103) of any one of the preceding claims, the method comprising the steps of:

setting the apparatus (101, 102, 103) in a normal operation mode, in which the main switches (S1, S2, S11, S12, SWm) are closed;
when an overcurrent occurs, setting the apparatus (101, 102, 103) in a current limiting mode, in which the main switches (S1, S2, S11, S12, SWm) are opened, and a sub-circuit comprising branch diodes (Da1, Da2) and a chopper-circuit (CC) mitigates the current in case of a short circuit by leading the current through this sub-circuit, the current limiting mode being performed for a predefined period ($T_{lim}$); and
after the predefined period ($T_{lim}$), setting the apparatus (101, 102, 103) in a fast interruption mode, in which the main switches (S1, S2, S11, S12, SWm) are open and the chopper-circuit (CC) is turned off by turning off the chopper semiconductor Sb.

**11.** The method of claim 10,

wherein the duration of the predefined period is between 0.1 ms and 10 ms, particularly 0.5 ms and 20 ms, and/or wherein the frequency of the chopper-circuit's oscillating mode is between 1 kHz and 20 kHz, particularly between 2 kHz and 5 kHz.

**12.** Use of an apparatus (101, 102, 103) of any one of the preceding claims 1 - 9 for DC grids, for DC microgrids, for AC grids and/or for AC microgrids.

**13.** Use of an apparatus (101, 102, 103) of any one of the preceding claims 1 - 9 for an overcurrent occurring at an apparatus-input ($a_{in}$) and/or at an apparatus-output ($a_{out}$).

**14.** Use of an apparatus (101, 102, 103) of any one of the preceding claims 1 - 9 for a blackstart of a DC bus.

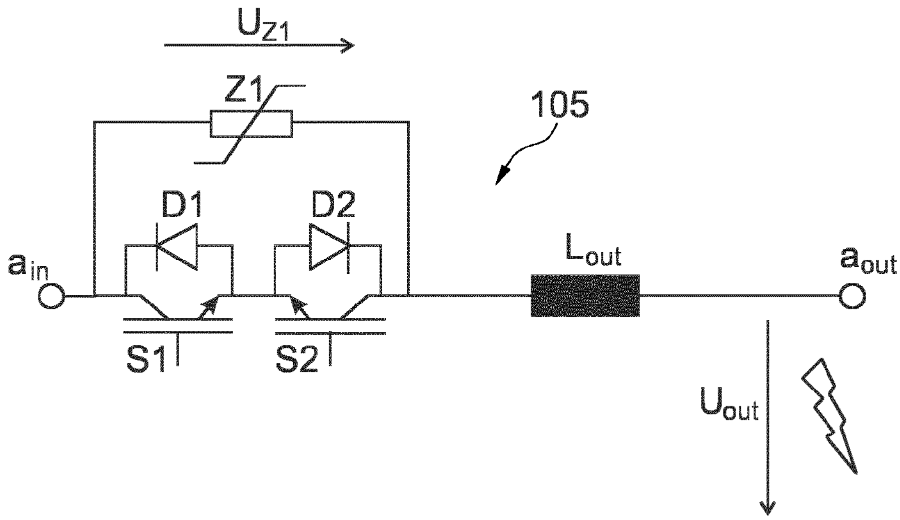


Fig. 1

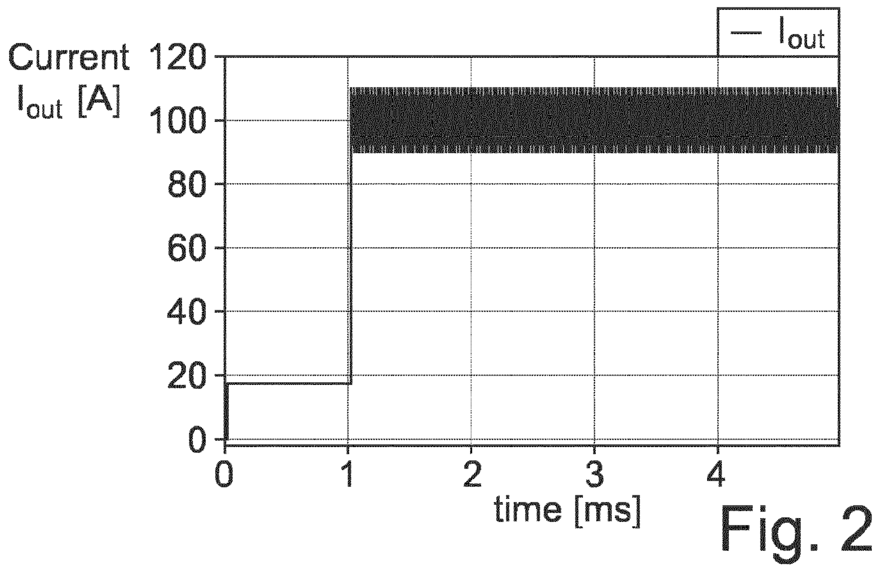


Fig. 2

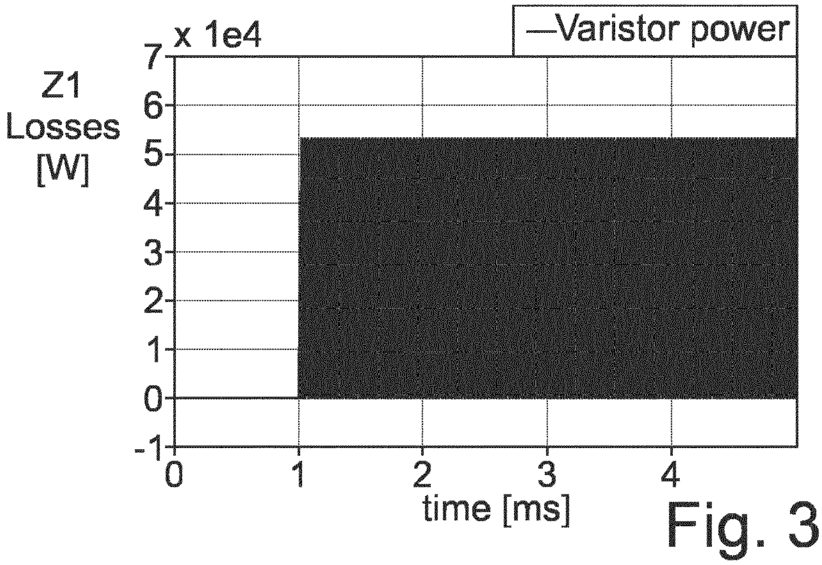


Fig. 3

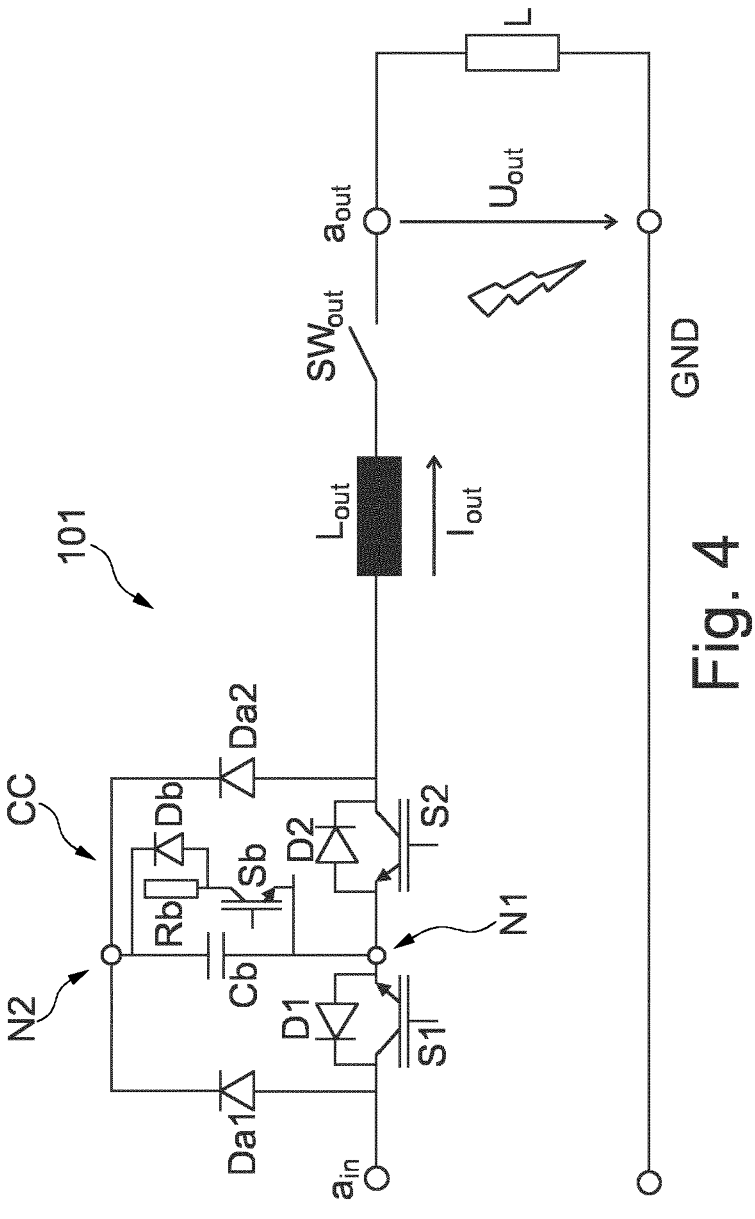
101
CC
N2
N1
Rb
Db
Sb
Cb
D1
D2
S1
S2
Da1
Da2
$a_{in}$
$L_{out}$
$I_{out}$
$SW_{out}$
$a_{out}$
$U_{out}$
L
GND

Fig. 4

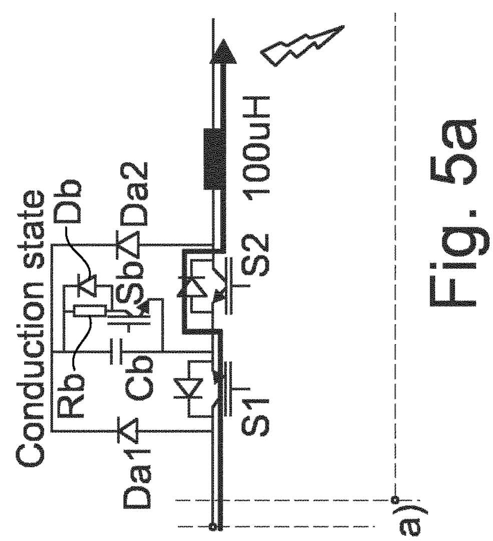


Fig. 5a

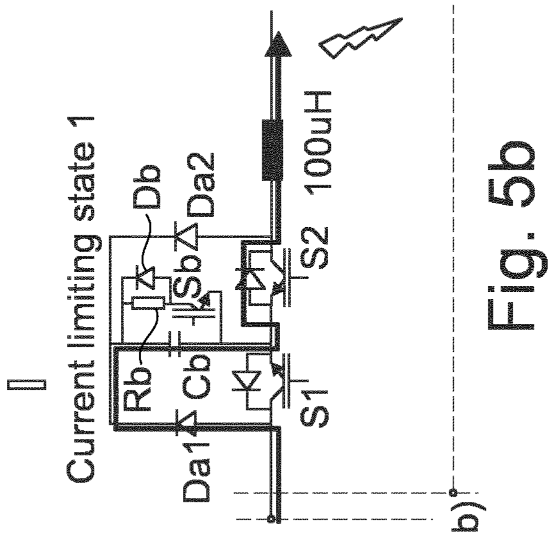


Fig. 5b

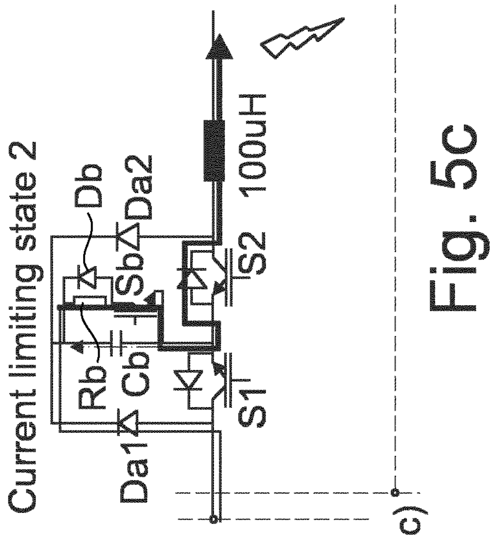


Fig. 5c

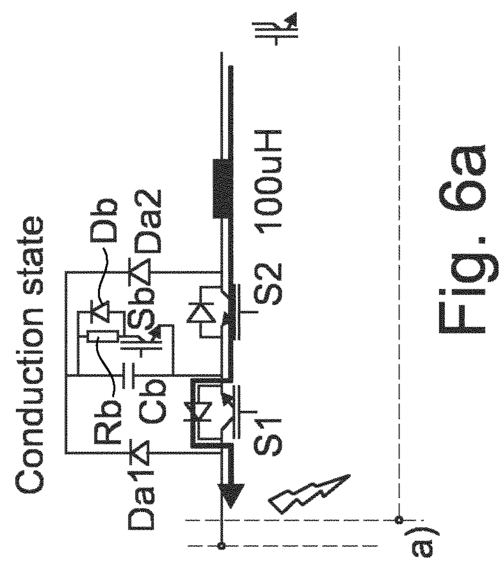


Fig. 6a

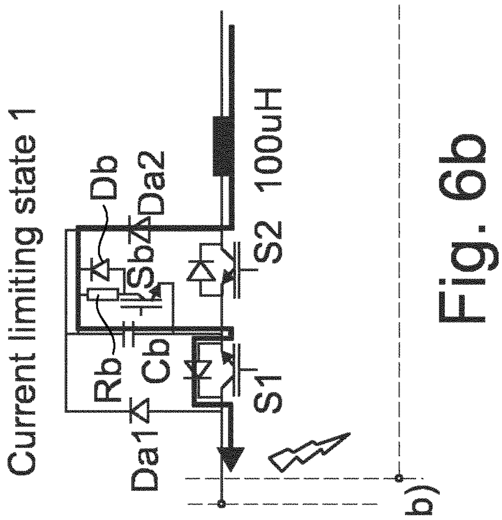


Fig. 6b

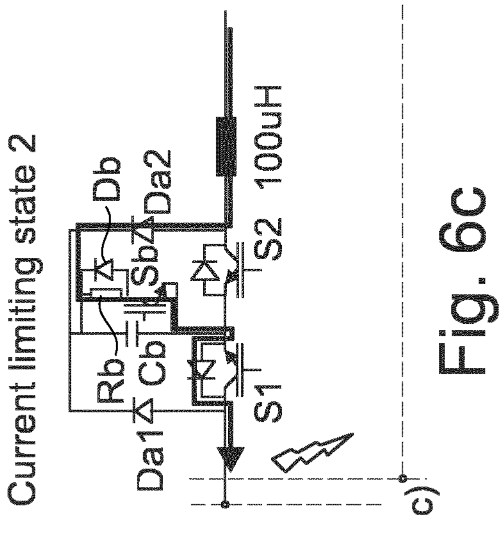


Fig. 6c

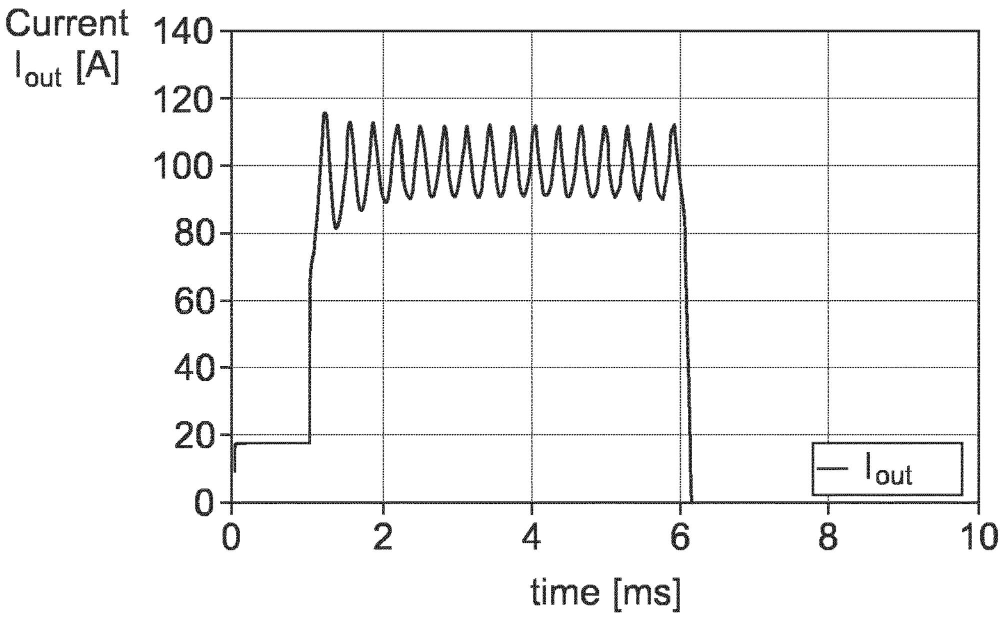
Current
$I_{out}$ [A]
140
120
100
80
60
40
20
0
0
2
4
6
8
10
time [ms]
$I_{out}$

Fig. 7

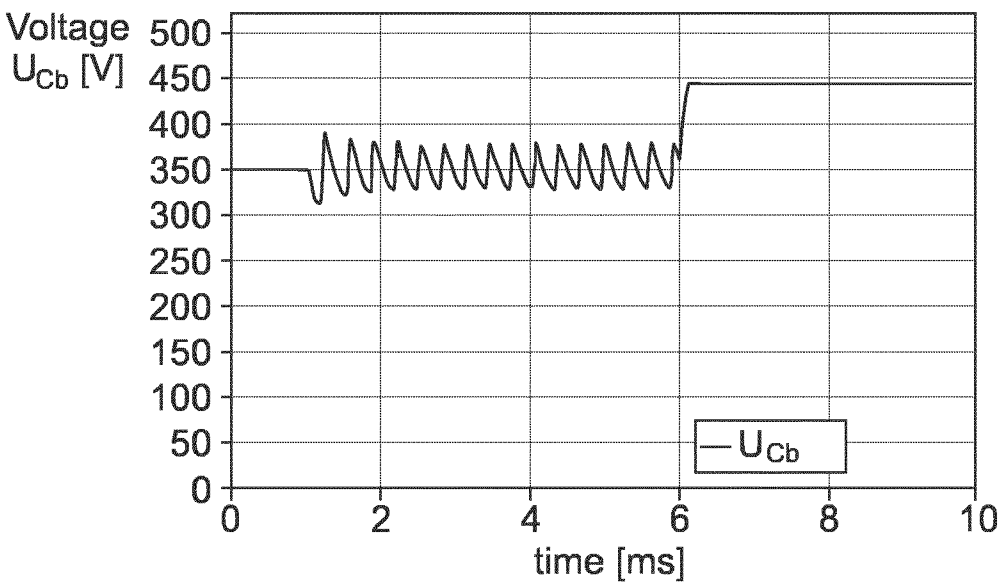
Voltage
$U_{Cb}$ [V]
500
450
400
350
300
250
200
150
100
50
0
0
2
4
6
8
10
time [ms]
$U_{Cb}$

Fig. 8

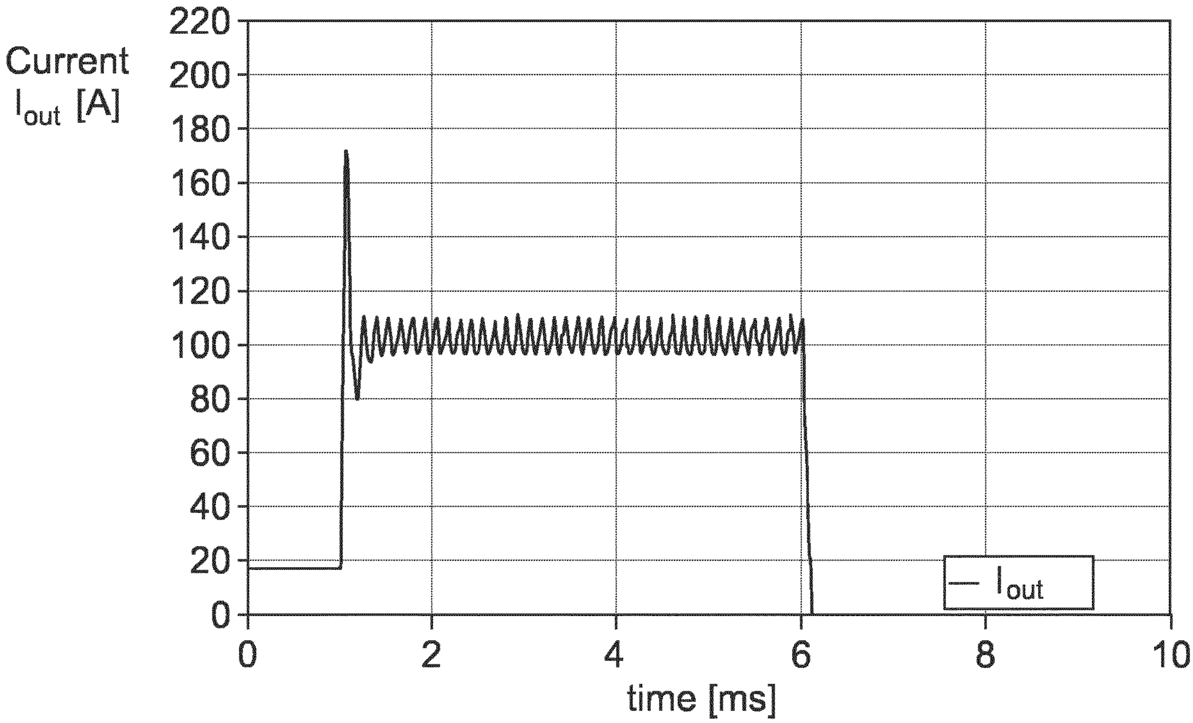
Current
$I_{out}$ [A]
220
200
180
160
140
120
100
80
60
40
20
0
0
2
4
6
8
10
time [ms]
— $I_{out}$

Fig. 9

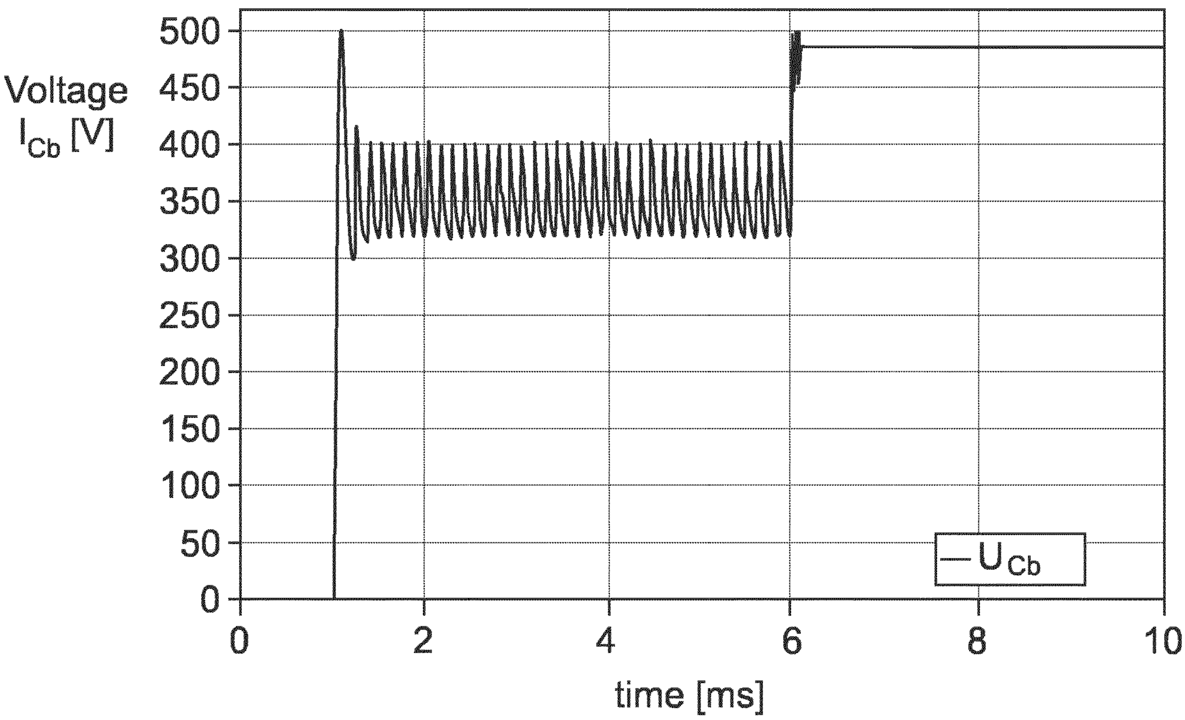
Voltage
$I_{Cb}$ [V]
500
450
400
350
300
250
200
150
100
50
0
0
2
4
6
8
10
time [ms]
— $U_{Cb}$

Fig. 10

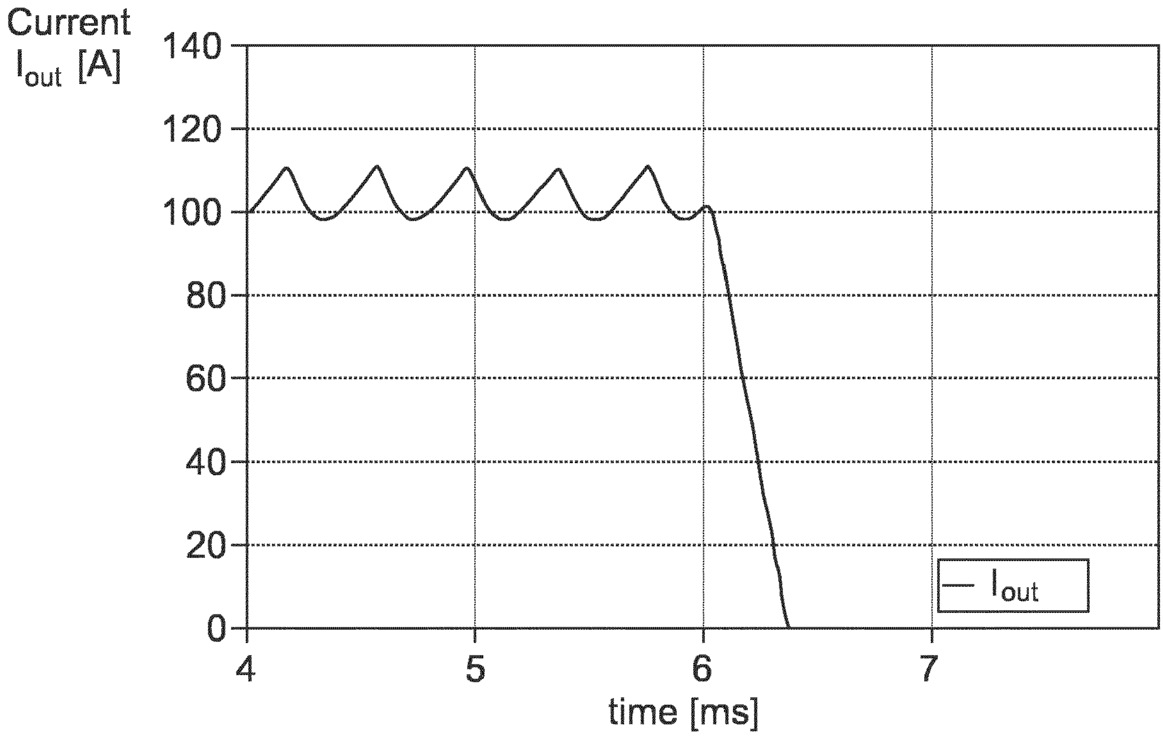
Current
Iout [A]
140
120
100
80
60
40
20
0
4
5
6
7
time [ms]
Iout

Fig. 11

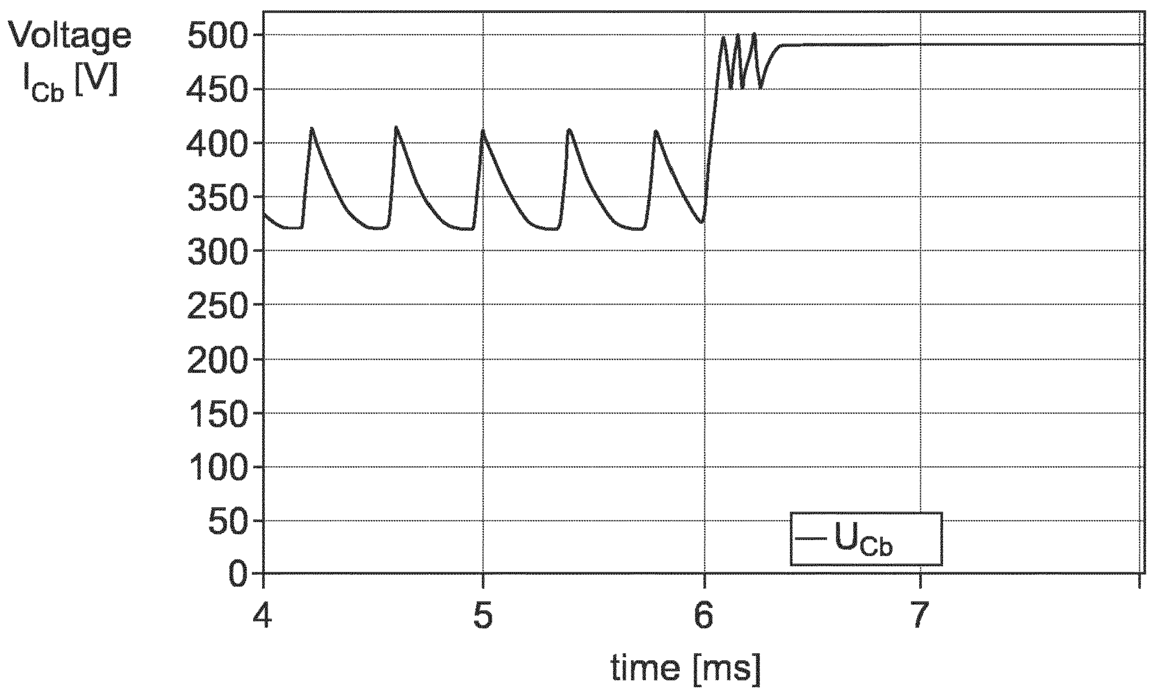
Voltage
ICb [V]
500
450
400
350
300
250
200
150
100
50
0
4
5
6
7
time [ms]
UCb

Fig. 12

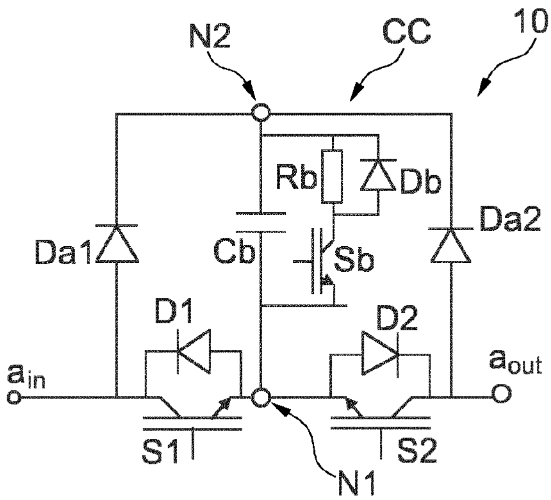


Fig. 13

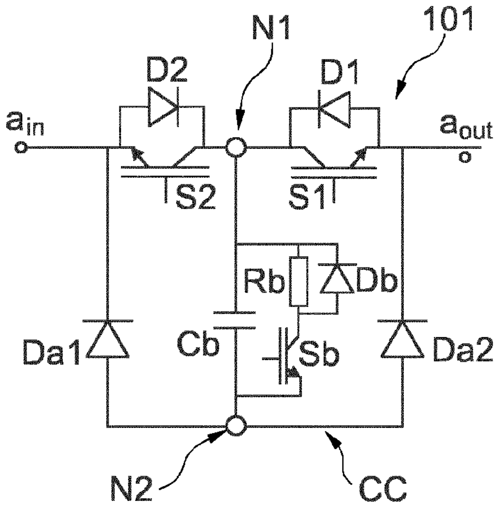


Fig. 14

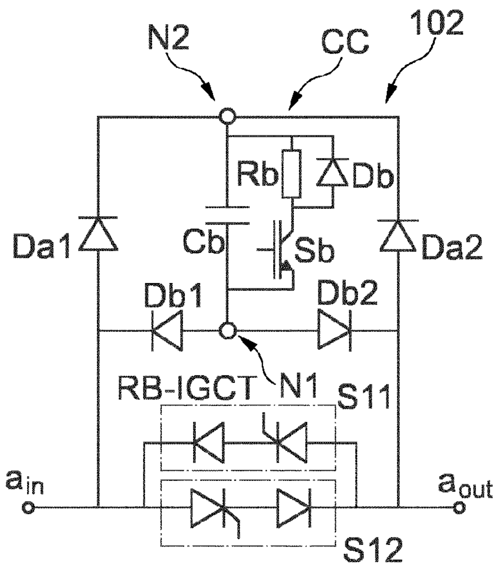


Fig. 15

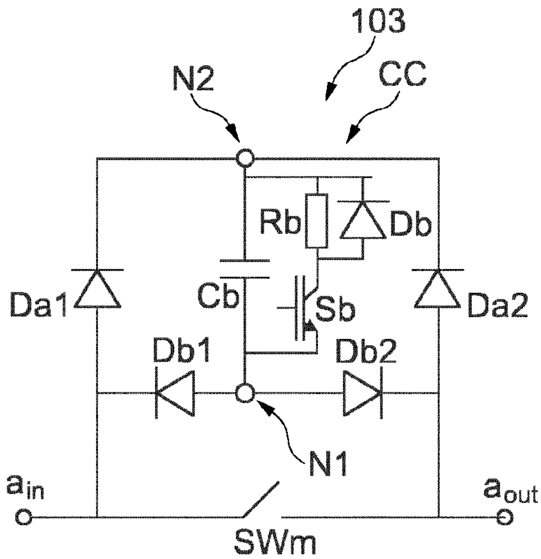


Fig. 16

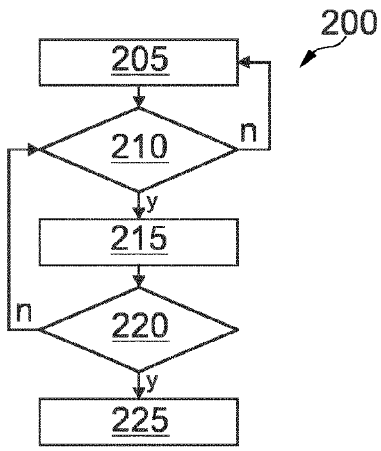


Fig. 17

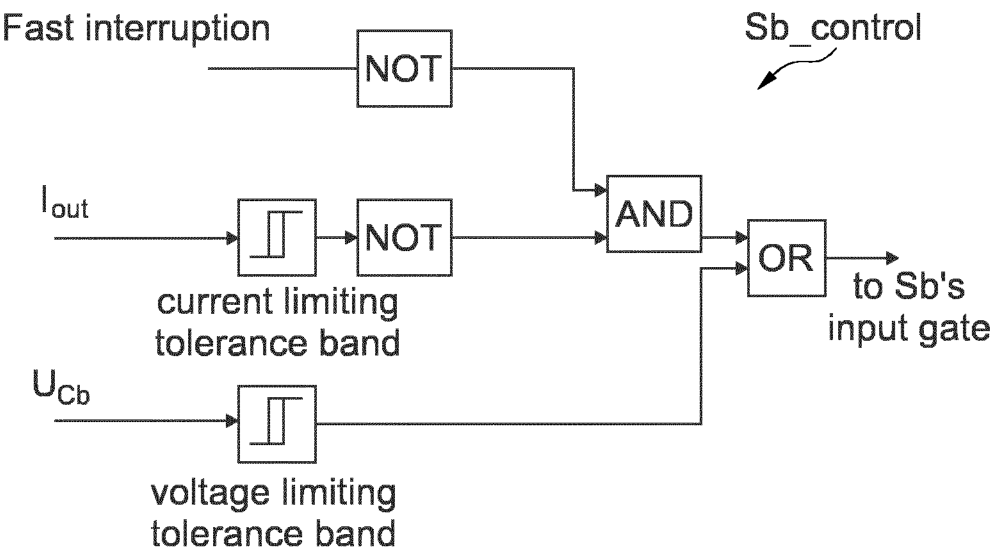
Fast interruption
NOT
Sb_control
$I_{out}$
NOT
AND
OR
to Sb's input gate
current limiting tolerance band
$U_{Cb}$
voltage limiting tolerance band

Fig. 18

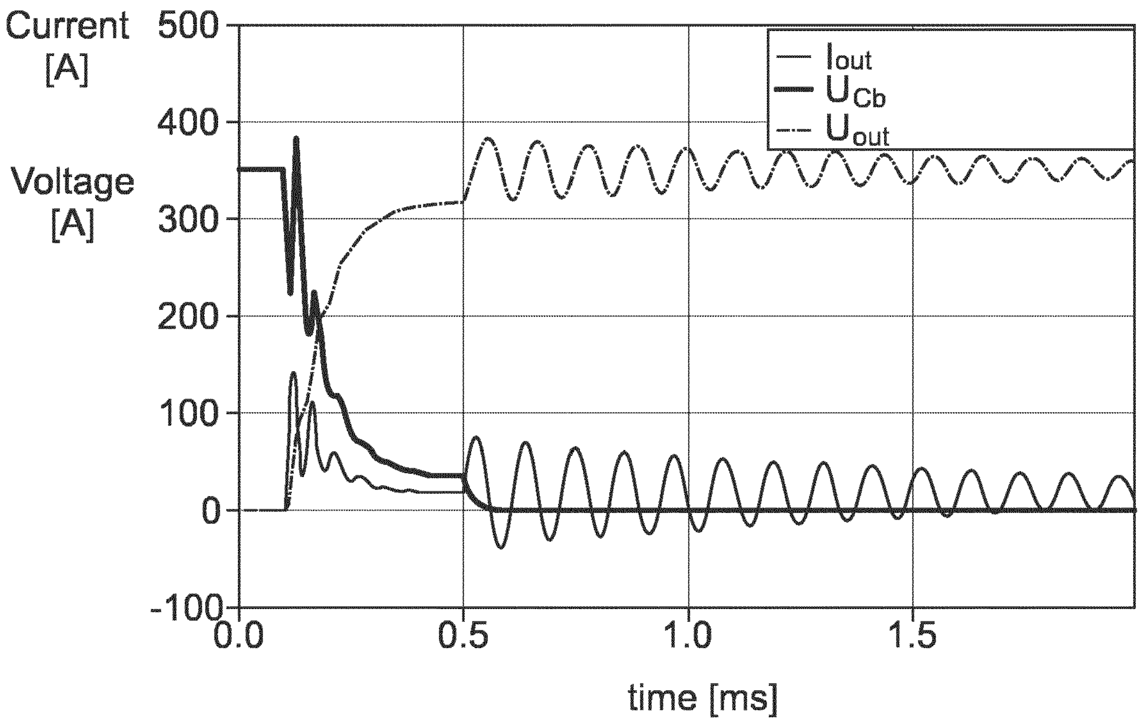
Current [A]
Voltage [A]
500
400
300
200
100
0
-100
0.0
0.5
1.0
1.5
time [ms]
$I_{out}$
$U_{Cb}$
$U_{out}$

Fig. 19

Europäisches Patentamt
European Patent Office
Office européen des brevets

# EUROPEAN SEARCH REPORT

Application Number
EP 24 19 8980

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/229121 A1 (DAVIDSON COLIN CHARNOCK [GB]) 13 August 2015 (2015-08-13)<br>* column 10, line 55 - column 13, line 6 *<br>* figures 1,7 *<br>* abstract *<br>----- | 1-14 | INV.<br>H02H9/02 |
| A | GB 2 542 789 A (ALSTOM TECHNOLOGY LTD [CH]) 5 April 2017 (2017-04-05)<br>* abstract *<br>* page 8, line 30 - page 11, line 6 *<br>----- | 1-14 | |
| A | US 2022/014185 A1 (HANDT KARSTEN [DE] ET AL) 13 January 2022 (2022-01-13)<br>* abstract *<br>* figures 1-2 *<br>* paragraph [0031] - paragraph [0042] *<br>----- | 1-14 | |

TECHNICAL FIELDS SEARCHED (IPC)

H02H

The present search report has been drawn up for all claims

1

| Place of search | Date of completion of the search | Examiner |
|---|---|---|
| Munich | 5 March 2025 | Operti, Antonio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 19 8980

This annex lists the patent family members relating to the patent documents cited in the above-mentioned European search report. The members are as contained in the European Patent Office EDP file on
The European Patent Office is in no way liable for these particulars which are merely given for the purpose of information.

05-03-2025

| Patent document cited in search report | Publication date | Patent family member(s) | Publication date |
|---|---|---|---|
| US 2015229121 A1 | 13-08-2015 | CN 104756339 A | 01-07-2015 |
| | | EP 2701255 A1 | 26-02-2014 |
| | | US 2015229121 A1 | 13-08-2015 |
| | | WO 2014029542 A1 | 27-02-2014 |
| GB 2542789 A | 05-04-2017 | NONE | |
| US 2022014185 A1 | 13-01-2022 | CN 112997373 A | 18-06-2021 |
| | | EP 3654477 A1 | 20-05-2020 |
| | | EP 3853957 A1 | 28-07-2021 |
| | | US 2022014185 A1 | 13-01-2022 |
| | | WO 2020099103 A1 | 22-05-2020 |

EPO FORM P0459

For more details about this annex : see Official Journal of the European Patent Office, No. 12/82